# EUROPEAN PATENT APPLICATION

(11) **EP 3 742 105 A1**
(43) Date of publication of application: **25.11.2020**
(21) Application number: 19275068.5
(22) Date of filing: 23.05.2019
(51) Int. Cl.: F41G 3/14, F41H 13/00, B64D 17/02, F41H 11/02, F42B 12/42

(54) **METHOD AND APPARTUS FOR ILLUMINATING A TARGET**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is disclosed a method for illuminating a target with electromagnetic (EM) energy comprising: providing a steerable source of EM energy, for generating a platform EM energy beam, deploying an airborne redirection unit (ARU) for redirecting the platform EM energy beam, transmitting the platform EM energy beam towards the ARU, thereby illuminating the ARU, receiving at the ARU the platform energy beam, deflecting at the ARU the platform EM energy beam so as to provide a redirected EM energy beam for transmission towards and illumination of a target.

## Description

According to the invention there is provided a method for illuminating a target with electromagnetic (EM) energy and an airborne redirection unit for deflecting an EM energy beam.

Often it is desirable to illuminate a target with EM radiation, for example it may be desirable to transmit a radar signal into a given volume of airspace to detect objects in that volume. Alternatively, it may be desirable to illuminate with high power radiation (e.g. a high power laser beam) a particular target such that the target may be incapacitated.

Typically the source of EM radiation will position itself with an unobstructed and direct line of transmission between itself and the target or volume, and then illuminate the target or volume for a certain duration of time.

The applicant has observed that in certain circumstances, it is not possible or is otherwise disadvantageous to manoeuvre the source of radiation to a direct line of transmission with a designated target or volume.

According to a first aspect of the invention there is provided a method for illuminating a target with electromagnetic (EM) energy comprising: providing a steerable source of EM energy, for generating a platform EM energy beam, deploying an airborne redirection unit (ARU) for redirecting the platform EM energy beam, transmitting the platform EM energy beam towards the ARU, thereby illuminating the ARU, receiving at the ARU the platform energy beam, deflecting at the ARU the platform EM energy beam so as to provide a redirected EM energy beam for transmission towards and illumination of a target.

Such a provision allows for indirect illumination of targets. This can enable the illumination of otherwise inaccessible targets, effectively providing a capability for illuminating around corners once the ARU is deployed

The method may further comprise determining the position of the ARU relative to the source of the EM energy, generating, based on the position of the ARU relative to the source of EM energy, a source-aim signal for the EM energy source, the source-aim signal being configured to establish or adjust the EM energy source such that the platform energy beam is directed towards the ARU or remains directed towards the ARU as the position of the ARU or the position of the mobile platform changes.

Further still the method may comprise acquiring information defining the limitations of the steerable source, comparing the limitations of the steerable source to the generated source-aim signal, thereby determining whether the source-aim signal can be fulfilled given the limitations and the instantaneous position of the ARU relative to the source of EM energy, and if the source-aim signal cannot be fulfilled, determining an acceptable position of the ARU relative to the source of EM energy from which the source-aim signal can be fulfilled, moving the ARU or source of EM energy to establish the acceptable position.

By automatically suggesting a position for an improved EM transmission, not only can an illumination be successfully initiated, but by continually looping this process, a continued illumination can be performed.

The method may further comprise: determining the position of the target relative to the ARU, generating, based on: the position of the target relative to the ARU, and the position of the ARU relative to the source of the EM energy, a redirect signal for providing a configuration of the ARU such that the ARU may illuminate the target or maintain illumination of the target as the position of the source of EM energy, the ARU or the position of the target changes.

Still further the method may comprise acquiring information defining the limitations for configuring the ARU, comparing the limitations for configuring the ARU, to the redirect signal, thereby determining whether the redirect signal can be fulfilled given the limitations, the instantaneous position of the ARU relative to the source of EM radiation, and the instantaneous position of the ARU relative to the target, and if the redirect signal cannot be fulfilled, determining an acceptable combination of: the position of the ARU relative to the source of EM energy, the position of the ARU relative to the target, the configuration of the ARU, and then implementing the acceptable combination.

By automatically suggesting a position for an improved EM transmission, not only can an illumination be successfully initiated, but by continually looping this process, a continued illumination can be performed.

Yet further the method may comprise providing at the ARU a steerable director for determining the direction of the redirected EM energy beam wherein the redirect signal is configured to adjust the steerable director to maintain illumination of the target as the position of the ARU or the position of the target changes.

As such a greater set of combinations of ARU, target and EM source relative positions can be offered from which the illumination can be performed.

According to a second aspect of the invention there is provided an airborne redirection unit (ARU), for deflecting an electromagnetic (EM) energy beam, the ARU comprising: a surface for slowing the rate of descent, a beam director supported at the surface for slowing the rate of descent.

The beam director may be for reflecting the EM energy beam and/or may be for focussing the EM energy beam.

By focussing the energy, a more intense illumination can be provided.

The surface for slowing the rate of descent may comprise a canopy.

As such, the ARU can be configured as a parachute. This tends to provide an easily-deployable, low-cost and light weight ARU.

In particular the canopy may be configured to, upon illumination with the EM energy beam in a predetermined way, focus the EM energy beam onto the beam director.

This tends to provide a larger target for the EM source to illuminate at the ARU and as such can be more tolerant of inexact aim in transmitting the EM energy from the source to the ARU.

The beam director may comprise a steerable element.

As such a greater set of combinations of ARU, target and EM source relative positions can be offered from which the illumination can be performed.

The steerable element may be mounted on a stabilisation rig.

Such a provision can help to maintain a constant illumination of the target.

The ARU may further comprise a sensor for determining the position of the target.

The ARU may further comprise a sensor for determining the characteristics of an incoming EM energy beam or a sensor for determining the position of the source of an incoming EM energy beam, and further comprising an ARU reception-adjustment module for reconfiguring the ARU in response to the determined characteristics of the EM energy beam or the determined position of the source of the EM energy beam.

So that the invention may be well understood, embodiments of it will now be presented with reference to the following figures, of which:
Figure 1 shows an airborne redirection unit (ARU) for facilitating the illumination of a target;
Figure 2a shows the ARU of Figure 1 used in illuminating a target;
Figure 2b shows a second example of an ARU used in illuminating a target;
Figure 3 shows a flow diagram illustrating how an ARU can be used in illuminating a target;
Figure 4 shows a third embodiment of the ARU; and
Figure 5 shows a module within the ARU of Figure 4.

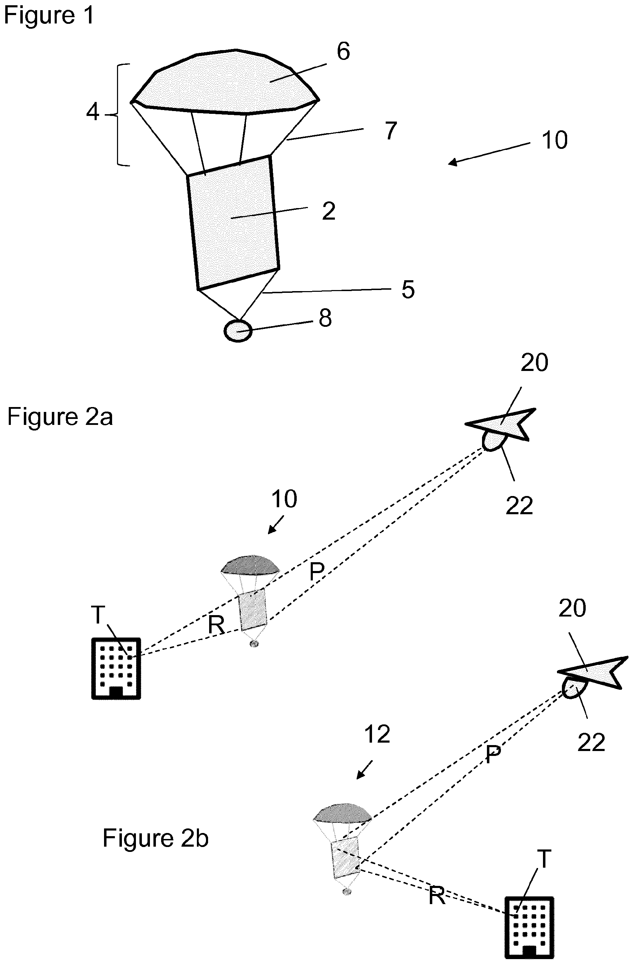

Referring to Figure 1 there is shown an ARU 10 comprising a parachute canopy 6, under which is suspended by lines 7 a director 2. A mass 8 is further suspended from the director 2 by lines 5.

The canopy 6 is substantially dome shaped and is configured to present a surface with a high level of drag, when the ARU 10 is airborne, to decrease the rate of descent. As such the ARU operates as a parachute, slowing the rate of descent of the director 2. The canopy 6 is fabricated from standard parachute materials such as rip-stop nylon.

The director 2 is substantially planar and can be provided for reflecting the EM radiation (e.g. by specular reflection or diffraction). Alternatively, the director 2 can be provided for deflecting the EM radiation as it is transmitted through (e.g. by refraction or diffraction).

The director 2 is sufficiently rigid to be able to hold its shape whilst airborne and thereby reliably maintain its EM directing characteristics. For example the director 2 may be formed from a layer or layers of sheet material held taut by a frame, or may be formed from an inflatable structure. Alternatively the director 2 may be formed from a dielectric material throughout which a conductive additive has been distributed so as to confer the relevant EM properties.

The characteristics of the mass 8 are determined with regard to the director 2 to provide a suitable weight to hold the director 2 taut and to orient the director 2 in a generally vertical condition.

Referring to Figure 2a, there is shown an airborne ARU 10 facilitating the illumination of a target T which, as exemplified here, is a particular window of a building. The ARU 10 is operating in combination with a mobile platform 20 on which is mounted a steerable source of EM energy 22.

The ARU 10 is provided with the director 2 configured as a transmissive lens, receiving a divergent beam of EM energy P from the platform 20 (specifically from the steerable source of EM energy 22), and outputting a convergent beam R which is focussed on the target T.

Referring to Figure 2b, there is shown a second airborne ARU 12 facilitating the illumination of a target T. The ARU 12 is operating in conjunction with a mobile platform 20 outputting a beam R from the steerable source of EM energy 22 which is focussed on the target T.

The ARU 12 is provided with a director configured as a reflective lens, receiving a divergent beam of EM energy P from the platform 20 and subsequently reflecting and focussing the outputted beam R onto the target.

In each of the embodiments shown in Figure 2a and 2b, the director 2 is a passive device and as such the platform 20 should manoeuvre to a particular region of airspace, defined by the relative positions of the target and the ARU, to effect a desired redirection of the EM radiation.

For example with the Figure 2a embodiment, the distance and angle (elevation and azimuth) between the target and ARU 10 director will tend to define a position in the airspace from which an EM transmission having a certain divergence (i.e. as from the source 22) will illuminate the director and thereupon be focussed and directed onto the target.

For example, with the Figure 2b embodiment, the distance and angle (elevation and azimuth) between the target and ARU 12 director will tend to define a position in the airspace from which an EM transmission having a certain divergence (i.e. as from the source 22) will illuminate the director and thereupon be reflected onto the target. If the divergence is minimal, for example if the EM transmission is a collimated beam, a planar specular reflector may be suitable for use as the director. Where the divergence of the EM transmission from the source 22 is non-negligible, a specular reflector with a certain curvature may be provided. Where the EM energy P is required to travel distances in the order of hundreds of metres, there will tend to be appreciable divergence even with a collimated beam, due to diffraction effects.

Once in that region of airspace, the platform 20 may remain there (e.g. by hovering or circling) to maintain the desired focal characteristic.

In alternative embodiments, the director 2 may be active and thus able to change its shape, orientation or reflective, refractive or diffractive properties to accommodate a wider range of platform positions, and thereby enlarge the region of airspace the platform should remain in whilst effecting the illumination. To accommodate varying platform positions, the ARU would need to be intermittently or continuously informed of the positions of the platform, ARU and target relative to one another, with characteristics adapted accordingly.

In alternative embodiments, the energy source 22 may be able to select a particular divergence for the beam P dependent on the distance between the source 22 and the director 2. Other characteristics of the beam P may be selected, dependent on the angle between the source 22 and the director 2. Accordingly there may be provided a larger airspace envelope in which the transmission can be effected.

As an alternative to the canopy, other surfaces for slowing the rate of descent may be provided. For example other air brakes may be provided. The alternative surfaces may even constitute aerofoils capable of generating lift (e.g. a glider or a rotorcraft).

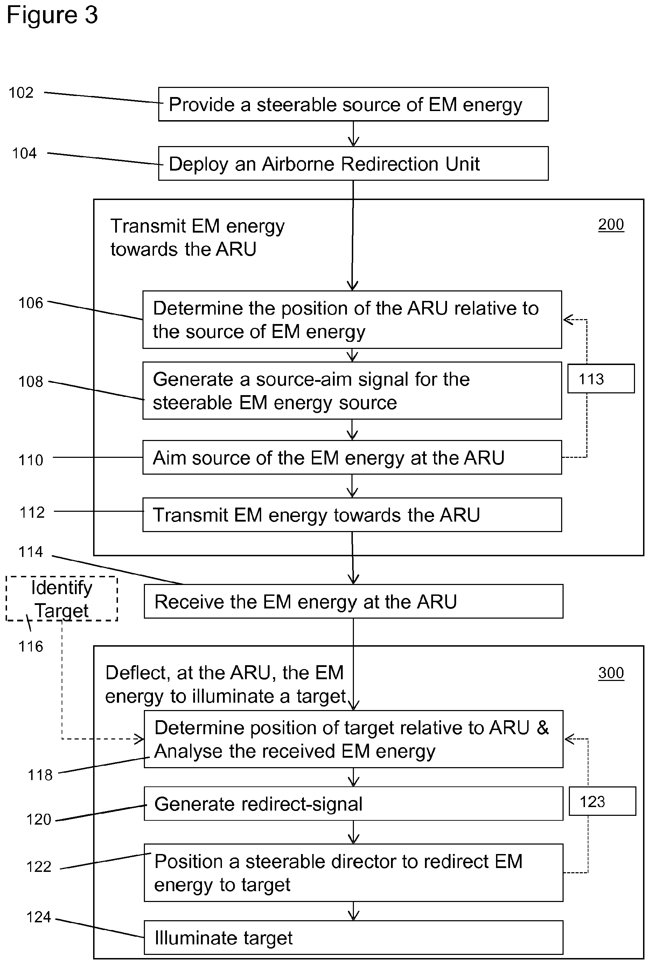

In operation, as can be appreciated with reference to Figure 3, there is firstly at step 102 provided a steerable source of EM energy 22. In particular, the steerable source of EM energy may be provided at or by the mobile platform 20.

Then, at step 104 an airborne redirection unit (10 or 12) is deployed. This may be deployed from the mobile platform 20 itself, or could be deployed by a separate platform or entity.

Next, at general step 200 the source of EM energy 22 transmits EM energy towards the ARU (10 or 12).

General EM transmission step 200 comprises sub-steps 106, 108, 110 and 112.

At sub-step 106, the position of the ARU relative to the source of EM energy is determined (and from this the distance and angle therebetween can be inferred). Thus at sub-step 108, a source-aim signal can be generated for the EM energy-source. These determinations can be made onboard the ARU, or can be determined offboard the ARU (for example at the mobile platform) and communicated to the ARU.

Accordingly, at sub-step 110 the source of the EM energy is aimed at the ARU, and then at sub-step 112, EM energy is transmitted towards the ARU and consequently at step 114 EM energy is received at the ARU.

With the EM energy received at the ARU, the next general step 300 is to deflect at the ARU the EM energy to illuminate a target.

General deflection/illumination step 300 comprises sub-steps 118, 120, 122 and 124.

The first sub-step 118 determines the position of the target relative to the ARU and also analyses the received EM energy. The analysis of the EM received energy may be done using sensors at the ARU, or may be inferred from the range, angle and EM energy characteristics of the source 22.

As a prerequisite to this sub-step 118, a target is assumed to have been previously identified, or is identified via a target identification process 116.

With knowledge of the relative positions of the ARU and the target, at sub-step 120 a redirect-signal can be generated, in order to configure the ARU to deflect the received EM energy towards the target.

Thus at sub-step 122 the redirect signal is fed to the steerable director to redirect the EM energy to the target, thereby effecting sub-step 124 where the target is illuminated.

The duration of transmission and illumination may be predetermined (for example so that a particular communication signal can be delivered) or may be dependent on fulfilment of certain criteria (for example the sufficient incapacitation of a target). However, for the duration of the transmission and illumination, the sub-steps 106, 108, 110 and 118, 120, 122 loop continuously to maintain aim on the ARU and target respectively. The control of these loops is regulated by modules 113 and 123 respectively.

Not all of the steps need occur sequentially, particularly so at initiation of the system. For example in other arrangements it may be possible, in advance of any EM transmission, to: (i) perform the position-determination, signal-generation and aiming steps 106, 108, 110 for facilitating the transmission to the ARU; substantially at the same time as (ii) performing the position-determination and received energy analysis, signal-generation and director-repositioning steps 118, 120, 122 for facilitating the transmission from the ARU. Thus any subsequent transmission could immediately illuminate the target.

Moreover, if the system were imputed with knowledge of the limits of its redirecting capabilities (e.g. arising from the constraints of the steerable source of EM energy and/or the ARU steerable director) it may be able to recognise when these limits would be exceeded given initial positions, and in such circumstances issue feedback that an illumination was not presently possible and/or suggest a repositioning of the platform source or the ARU.

The particular component or components of the ARU selected to receive the EM energy (i.e. selected to have EM energy transmitted to them) will depend on the structure of the ARU. In ARU 10 and 12, their respective directors receive the EM energy.

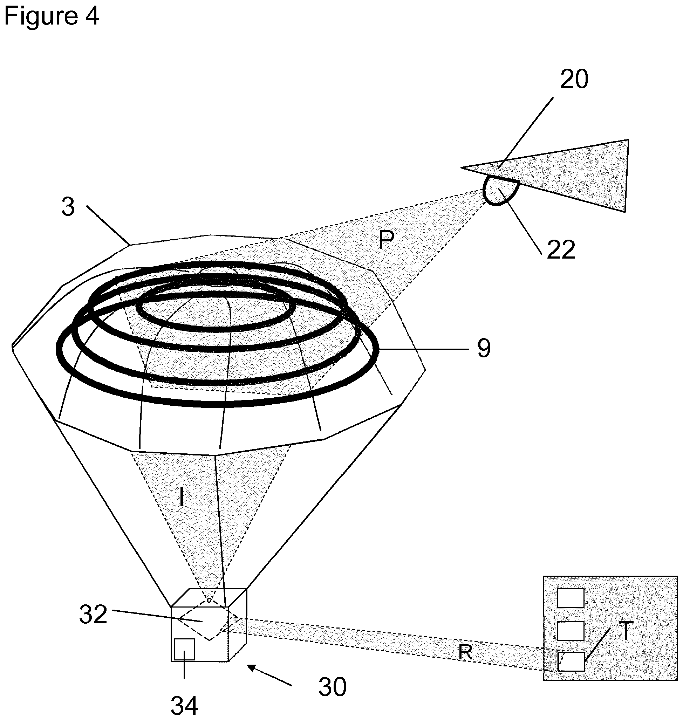

Referring to Figure 4 a 'two-stage redirect' ARU 14 is shown comprising a beam-shaping canopy 3 from which is suspended by lines 7 an active director 30.

In common with the canopy 6, the beam-shaping canopy 3 comprises a dome shaped element for increasing drag as the ARU 14 descends. However, ARU 14 also comprises an integrated configuration of beam-shaping elements 9. In particular, the beam-shaping elements used here provide an array of concentric conductive rings adapted to focus RF energy by diffraction.

In alternative embodiments, the canopy 3 may be adapted to refract the incident RF beam with the material of the canopy (which could be Nylon) having certain additives distributed throughout in a non-homogenous manner. Alternatively an additive coating may be applied to varying depths on the surface of the canopy 3.

Such additives would tend to provide spatially varying electromagnetic properties (e.g. permittivity and permeability) to give the desired refractive properties and in turn deflect the radiation incident on the canopy 3 as desired.

The shape of the canopy can be chosen to assist in achieving the desired effects, and can be provided to offer synergies in aerodynamic drag and deflective properties in particular. The dome-shape canopy 3 can approximate to a convex lens form.

In alternative embodiments, the canopy 3 may comprise a plurality of sub-canopies arranged as a stack, separated at a certain distance, to provide further beam deflection effects. Such stacked canopies may be mounted on an inflatable frame (inflated by air flow or by the release of gas from an integrated canister).

The active director 30 comprises a reflecting and collimating element 32 mounted on a steerable gimbal (not shown). The orientation of the reflecting and collimating element 32 can be adapted in response to signals from a controller module 34.

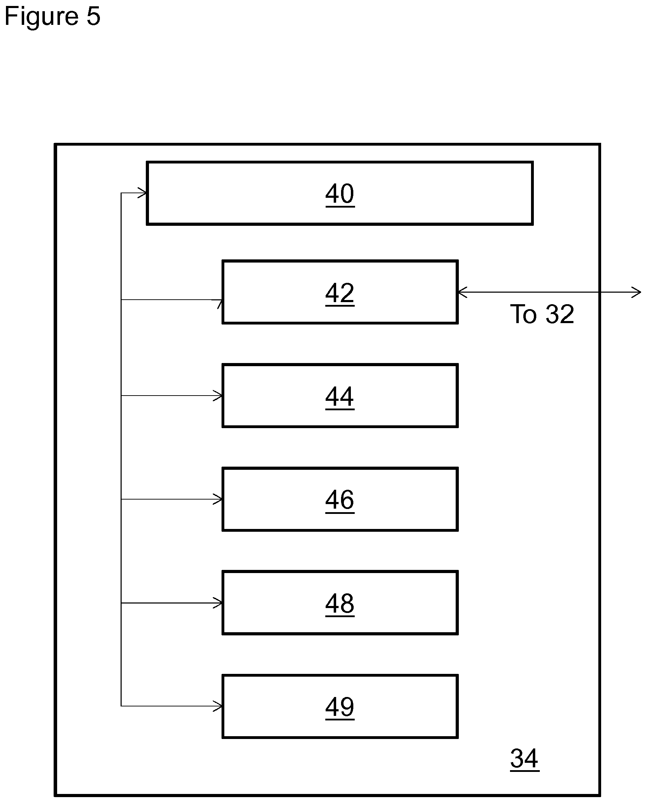

With reference to Figure 5 the controller module 34 comprises a controller 42 (for issuing signals to actuators to reposition the reflecting and collimating element 32), a global navigation sensor system 48 (e.g. GPS) for determining the absolute position of the ARU, a sensor transceiver 46 for target detection and tracking, a stabilisation module 44, a memory 49, and a processor 40 operably communicating with each of these and configured to determine how to deflect the incoming EM energy towards the target.

In operation, the mobile platform 20 identifies the location of the 'two-stage redirect' ARU 14, and directs its EM energy source 22 towards specifically the beam-shaping canopy 3, thereby illuminating it with beam P. The energy source 22 may select a particular divergence for the beam P dependent on the distance between the source 22 and the canopy 3. Other characteristics of the beam P may be selected, dependent on the angle between the source 22 and the canopy 3.

The beam-shaping canopy 3 focusses beam P into an intermediate beam I which is directed to and focussed on the reflecting and collimating element 32 within the active director 30.

The reflecting and collimating element 32 is configured to be in a position such that the focussed intermediate beam I is reflected towards the target T as a collimated beam R. In an alternative example, the reflecting and collimating element 32 may be replaced with a reflecting and focussing element, for focussing the beam R on the target T.

The position of the reflecting and collimating element 32 is effected, both initially and thereafter, by a redirect signal from the controller module 34.

The controller module 34 generates the redirect signal with reference to signals from the target detection unit 46, and a routine (which may be a look up table in memory device 49 or an algorithm stored in FPGA etc) for associating reflective element 32 orientations with particular beam R output directions, given input beam I.

In particular the controller module 34 receives from the target detection unit 46 a signal indicating the position and range of the target relative to the ARU 14. This position is converted at the processor 40 into a direction vector from the reflecting and collimating element 32, and this is in turn converted into a redirect signal indicating the position in which the reflecting and collimating element 32 should be held, given the incoming beam I. This redirect signal can then be relayed via the controller 42 to the actuators associated with element 32 to effect the position.

In some embodiments, the source of EM energy may be mounted on a gimbal and thereby steerable through being physically rotated in various axes. Alternatively or in addition, the EM energy source may be in the form of a phased array for steering the EM energy by controlling the phase of the signal emitted from each of the elements in the array.

In particular the steerable source of EM energy may be an RF phased array mounted on a gimbal.

The platform to which the EM source is mounted may be an aircraft but may alternatively be any form of vehicle including land vehicles and naval vessels.

In some arrangements it may be possible to have the source of energy mounted to the platform with a fixed orientation, provided that the platform itself is mobile enough to vary its own orientation in order to vary the orientation of the source.

## Claims

1. A method for illuminating a target with electromagnetic (EM) energy comprising:
Providing a steerable source of EM energy, for generating a platform EM energy beam,
Deploying an airborne redirection unit (ARU) for redirecting the platform EM energy beam,
Transmitting the platform EM energy beam towards the ARU, thereby illuminating the ARU,
Receiving at the ARU the platform energy beam,
Deflecting at the ARU the platform EM energy beam so as to provide a redirected EM energy beam for transmission towards and illumination of a target.

2. A method according to claim 1 comprising:
Determining the position of the ARU relative to the source of the EM energy,
Generating, based on the position of the ARU relative to the source of EM energy,
a source-aim signal for the EM energy source, the source-aim signal being configured to establish or adjust the EM energy source such that the platform energy beam is directed towards the ARU or remains directed towards the ARU as the position of the ARU or the position of the mobile platform changes.

3. A method according to claim 2 further comprising:
acquiring information defining the limitations of the steerable source,
comparing the limitations of the steerable source to the generated source-aim signal,
thereby determining whether the source-aim signal can be fulfilled given the limitations and the instantaneous position of the ARU relative to the source of EM energy,
and if the source-aim signal cannot be fulfilled,
determining an acceptable position of the ARU relative to the source of EM energy from which the source-aim signal can be fulfilled,
moving the ARU or source of EM energy to establish the acceptable position.

4. A method according to any one of the preceding claims comprising:
Determining the position of the target relative to the ARU, Generating, based on:
the position of the target relative to the ARU, and
the position of the ARU relative to the source of the EM energy,
a redirect signal for providing a configuration of the ARU such that the ARU may illuminate the target or maintain illumination of the target as the position of the source of EM energy, the ARU or the position of the target changes.

5. A method according to claim 4 further comprising:
Acquiring information defining the limitations for configuring the ARU,
Comparing the limitations for configuring the ARU, to the redirect signal,
Thereby determining whether the redirect signal can be fulfilled given the limitations, the instantaneous position of the ARU relative to the source of EM radiation, and the instantaneous position of the ARU relative to the target,
And if the redirect signal cannot be fulfilled,
Determining an acceptable combination of:
the position of the ARU relative to the source of EM energy,
the position of the ARU relative to the target,
the configuration of the ARU,
And then implementing the acceptable combination.

6. A method according to claim 4 or 5 further comprising:
Providing at the ARU a steerable director for determining the direction of the redirected EM energy beam,
Wherein the redirect signal is configured to adjust the steerable director to maintain illumination of the target as the position of the ARU or the position of the target changes.

7. An airborne redirection unit (ARU), for deflecting an electromagnetic (EM) energy beam, the ARU comprising:
A surface for slowing the rate of descent,
A beam director supported at the surface for slowing the rate of descent.

8. An ARU according to claim 7 wherein the beam director is for reflecting the EM energy beam.

9. An ARU according to claim 7 or 8 wherein the beam director is for focussing the EM energy beam.

10. An ARU according to any of claims 7 to 9 wherein the surface for slowing the rate of descent comprises a canopy.

11. An ARU according to claim 10 wherein the canopy is configured to, upon illumination with the EM energy beam in a predetermined way, focus the EM energy beam onto the beam director.

12. An ARU according to any of claims 7 to 11 wherein the beam director comprises a steerable element.

13. An ARU according to claim 11 wherein the steerable element is mounted on a stabilisation rig.

14. An ARU according to any of claims 7 to 13 further comprising a sensor for determining the position of the target.

15. An ARU according to any of claims 7 to 14 comprising:
a sensor for determining the characteristics of an incoming EM energy beam, or
a sensor for determining the position of the source of an incoming EM energy beam,
and further comprising an ARU reception-adjustment module for reconfiguring the ARU in response to the determined characteristics of the EM energy beam or the determined position of the source of the EM energy beam.
